# EUROPEAN PATENT APPLICATION

(11) **EP 4 379 367 A1**
(43) Date of publication of application: **05.06.2024**
(21) Application number: 22849117.1
(22) Date of filing: 27.06.2022
(51) Int. Cl.: G01N 27/62, G01N 24/08, G01N 30/72

(54) **METHOD OF IDENTIFYING ACTIVE SULFUR**

(30) Priority: 28.07.2021 JP 2021123716
(71) Applicant: University Public Corporation Osaka, Osaka-shi, Osaka 545-0051 (JP); Bio-Xcelerator, Inc., Tokyo 160-0016 (JP)
(72) Inventor: IHARA, Hideshi, Sakai-shi, Osaka 599-8531 (JP); KASAMATSU, Shingo, Sakai-shi, Osaka 599-8531 (JP)
(74) Representative: Mewburn Ellis LLP
(86) International application number: PCT/JP2022/025628
(87) International publication number: WO 2023/008047

(57) **Abstract**

A method for identifying active sulfur, including: a step of labeling active sulfur in a sample with an alkylating agent; a step of adding a reducing agent to a portion of liquid extracted in the first step to decompose active sulfur; a step of applying the sample subjected to reduction treatment and the sample not subjected to reduction treatment after the labeling to an analyzer, comparing results of analysis of both samples, and determining components of signals disappeared by the reduction treatment as candidates for the active sulfur in the sample; a step of confirmation that the signals are derived from the alkylating agent; and a step of, after the confirmation, extraction and purification of the components of the signals from the sample, and performing structural analysis of the components.

## Description

### TECHNICAL FIELD

The present invention relates to a method for identifying active sulfur.

### BACKGROUND ART

Although the physiological importance of reactive sulfur species/active sulfur species (RSSs) such as cysteine persulfide (CysSSH) and glutathione persulfide (GSSH) is acknowledged, the chemical properties of polysulfide are not completely understood or clarified due to the reactivity or complicated redox activity characteristics thereof.

Since RSSs are very unstable substances due to high reactivity thereof, the RSSs are easily decomposed in a step of extracting the RSSs from a sample. As a method for detecting RSSs without this decomposition, methods involving converting RSSs into stable derivatives using alkylating agents to detect the stable derivatives have been developed.

These detection methods reported in previous work in the following two Non Patent Literatures involve converting RSSs into stable derivatives using an alkylating agent (monobromobimane or N-ethylmaleimide, beta-(4-hydroxyphenyl)ethyl iodoacetamide) to detect the stable derivatives with mass spectrometers.

### CITATION LIST

### NON PATENT LITERATURE

Non Patent Literature 1
   Ida, T.; Sawa, T.; Ihara, H.; Tsuchiya, Y.; Watanabe, Y.; Kumagai, Y.; Suematsu, M.; Motohashi, H.; Fujii, S.; Matsunaga, T., et al. Reactive cysteine persulfides and S-polythiolation regulate oxidative stress and redox signaling. Proc Natl Acad Sci USA 2014, 111, 7606-7611, doi:10.1073/pnas.1321232111.
Non Patent Literature 2
   Akaike, T.; Ida, T.; Wei, F.Y.; Nishida, M.; Kumagai, Y.; Alam, M.M.; Ihara, H.; Sawa, T.; Matsunaga, T.; Kasamatsu, S., et al. Cysteinyl-tRNA synthetase governs cysteine polysulfidation and mitochondrial bioenergetics. Nat Commun 2017, 8, 1177, doi:10.1038/s41467-017-01311-y.

### SUMMARY OF INVENTION

### TECHNICAL PROBLEM

The above-mentioned methods involve detecting and quantifying specified RSSs such as cysteine persulfide and glutathione persulfide. Only specified RSSs among RSSs having unknown molecular weights and structures can however be detected. A problem was therefore that unknown RSSs were not able to be comprehensively investigated.

An object of the present invention is to provide a method for identifying active sulfur that improves accuracy in identifying RSSs in view of this when active sulfur contained in various samples such as food and tissues and cells of animals and plants, fungi, viruses, and clinical samples such as blood plasma, serum, cerebrospinal fluid, and bronchial lavage fluid is investigated.

### SOLUTION TO PROBLEM

A method for identifying active sulfur in a sample, including:
(a) the first step of labeling active sulfur in the sample with an alkylating agent;
(b) the second step of adding a reducing agent to a portion of liquid extracted in the first step to decompose active sulfur;
(c) the third step of applying the sample subjected to reduction treatment and the sample not subjected to reduction treatment after the labeling to an analyzer, comparing results of analysis of both samples, and determining the components of signals disappeared by the reduction treatment as candidates for the active sulfur in the sample;
(d) the fourth step of confirmation that the signals are derived from the alkylating agent; and
(e) the fifth step of, after the confirmation, extraction and purification of the components of the signals from the sample, and performing structural analysis of the components.

The above-mentioned method is performed.

### ADVANTAGEOUS EFFECT OF INVENTION

According to the present invention, a method for identifying active sulfur that improves accuracy in identifying RSSs in a sample can be provided.

### BRIEF DESCRIPTION OF DRAWINGS

[Figure 1] Figure 1 is an explanation chart showing a method for identifying active sulfur according to an embodiment of the present invention.
[Figure 2] Figure 2 is an explanation chart showing the decomposition of active sulfur structure by treatment with a reducing agent according to an embodiment of the present invention.
[Figure 3] Figure 3 is an explanation chart showing the confirmation of the signal of an active sulfur component with a stable isotope-labeled reagent according to an embodiment of the present invention.
[Figure 4] Figure 4 is the results of Examples of investigating unknown active sulfur components according to an embodiment of the present invention.

### DESCRIPTION OF EMBODIMENTS

### (Superiority of the present invention to conventional identification method)

In conventional methods for detecting RSSs, RSSs are converted into stable derivatives with an alkylating agent (especially monobromobimane or N-ethylmaleimide) for preventing the active sulfur components from being easily decomposed in a step of extracting the active sulfur components from a sample, and these are detected. Since the alkylating agent had the action of promoting the hydrolysis of RSSs, it was however difficult to detect unknown highly reactive RSSs having unknown molecular weight and structure using the alkylating agent.

Since especially commercial alkylating agents had the action of promoting the decomposition of active sulfur structures, it was difficult to detect and identify highly reactive (unstable) RSSs contained in a sample by the existing techniques, and unknown RSSs were not able to be comprehensively investigated.

In the present invention, candidates for RSSs are accordingly selected using a tyrosine derivative as the alkylating agent. The following tyrosine derivative, for example, TME-IAM (N-iodoacetyl l-tyrosine methyl ester), has the action of subjecting (terminal) thiol groups of RSSs to alkylation modification to form stable derivatives and the action of preventing the decomposition of the active sulfur structures. The accuracy in selecting the candidates for the RSSs has been improved using these actions. The tyrosine derivative is specified by the following chemical formula.

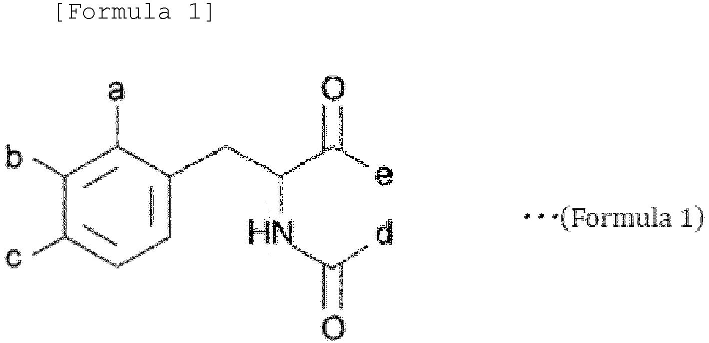

In the chemical formula of the above-mentioned tyrosine derivative, one of a to c is "OH", the others are "H", d is CₙH₂ₙα, α is "H" or a "halogen atom", the halogen atom is preferably "I", n is an integer of 1 to 5, e is (NH)ₓ(CO)_{y}C_{z}H_{2z}β, x is 1 or 0, y is 1 or 0, z is an integer of 1 to 5, β is "H" or a "halogen atom", and the halogen atom is preferably "I". The above-mentioned tyrosine derivative includes the following compounds.

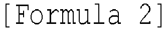

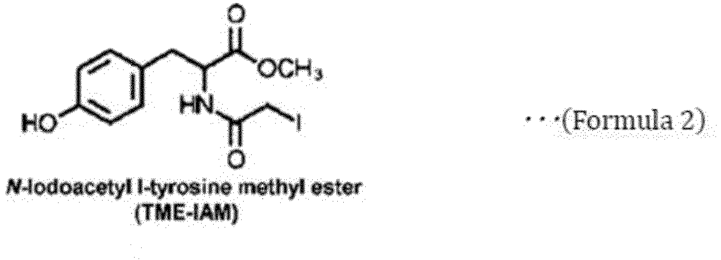

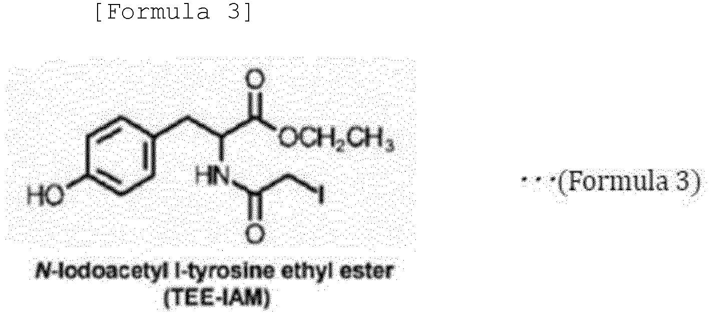

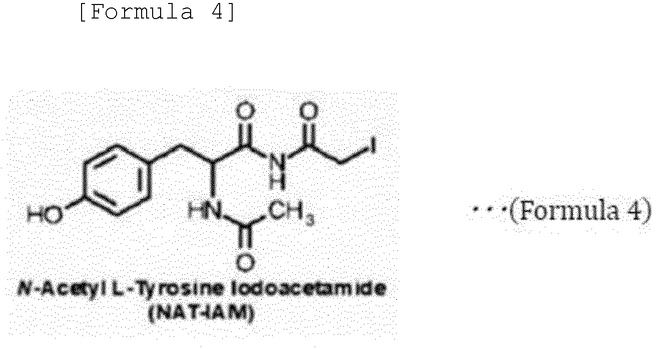

The selective detection of product ions derived from TME-IAM or the like during mass spectrometry enables comprehensively investigating unknown RSSs at the same time. Furthermore, the use of TME-IAM or the like labeled with a stable isotope enables selecting the candidates for the RSSs more accurately.

### 1-1 (Method for synthesizing TME-IAM)

First, 1 mmol of L-tyrosine methyl ester was dissolved in N,N-dimethylformamide, and 2.2 mmol of *N,N'-*dicyclohexylcarbodiimide, which is a dehydration condensation agent, and 1 mmol of iodoacetic acid were added. The mixture was stirred on ice for 2 hours and then stirred at room temperature for 1 hour.

### Reagents

### [Synthesis of N-iodoacetyl tyrosine methyl ester (TME-IAM)]

Tyrosine methyl ester (Tokyo Chemical Industry Co., Ltd.) 195.2 mg
N,N-Dimethylformamide (KATAYAMA CHEMICAL INDUSTRIES Co.,Ltd.) 2 mL
N,N'-Dicyclohexylcarbodiimide (NACALAI TESQUE, INC.) 453.8 mg
Iodoacetic acid (NACALAI TESQUE, INC.) 186.0 mg

### 1-2 (Confirmation of product)

The tyrosine methyl ester solution and the reaction solution were diluted for confirmation of the synthesized TME-IAM, and the absorbances at 220 nm, 250 nm, and 275 nm were then analyzed by high performance liquid chromatography (HPLC) to confirm the reaction product.

### Reagents

0.1% formic acid
Formic acid (abt.99 %) (FUJIFILM Corporation) 1 mL
Ultrapure water 999 mL
Methanol for LC/MS (KANTO CHEMICAL CO., INC.)

### Machines

Pump: PU-2085 plus (JASCO Corporation)
Autosampler: AS-2051 plus (JASCO Corporation)
Detector: MD-2010 plus (JASCO Corporation)
Degasser: DG-2085-54 (JASCO Corporation)
Gradient mixer: MX-2080-32 (JASCO Corporation)
Column oven: CO-2065 plus (JASCO Corporation)

### HPLC conditions

A buffer: 0.1% formic acid
B buffe: methanol

### Gradient:

**[Table 1]**

| | | | | | |
|---|---|---|---|---|---|
| Time (min) | 0 | 14 | 18 | 18.1 | 22 |
| A buffer (%) | 100 | 0 | 0 | 100 | 100 |
| B buffer (%) | 0 | 100 | 100 | 0 | 0 |

Flow rate: 1 mL/min
Inflow: 5 µL
Column: Mightysil RP-18 GP 75-3.0 (5 µm) (KANTO CHEMICAL CO., INC.)

### 2-1 (Partial purification of TME-IAM)

To the reaction solution were added 4 mL of methanol and 181 g Wakogel 100C, and 6 mL of 0.1% formic acid was then added with stirring. An empty reservoir was filled with this, followed by filtration. Further, 1 mL of methanol and 1 mL of 0.1% formic acid were mixed, and the mixture was then added to the empty reservoir to collect the eluate. This was used as partially purified liquid.

### Reagents

0.1% formic acid
Methanol (KANTO CHEMICAL CO., INC.)
Wakogel(TM) 100C18 (FUJIFILM Wako Pure Chemical Corporation)

### 2-2 (Confirmation of partial purification)

In order to confirm the purification of TME-IAM, the partially purified liquid was diluted, and the absorbances at 220 nm, 250 nm, and 275 nm were then analyzed under the same conditions as in the section 1-2 to confirm the recovery of the reaction product.

### 2-3 (Confirmation of product in partially purified liquid)

In order to confirm the presence of TME-IAM in the purified liquid, the partially purified liquid was diluted, and the presence of TME-IAM was then confirmed by mass spectrometry using an HPLC-tandem mass spectrometer (LC-MS/MS).

### Reagents

0.1% formic acid
Methanol for LC/MS (KANTO CHEMICAL CO., INC.)

### Machines

Mass spectrometer: Xevo TQD (Waters Corporation)
HPLC: Alliance HPLC e2695 (Waters Corporation)

### HPLC conditions

A buffer: 0.1% formic acid
B buffer: Methanol (for LC/MS)

### Gradient:

**[Table 2]**

| | | | | | |
|---|---|---|---|---|---|
| Time (min) | 0 | 5 | 6.5 | 6.6 | 12 |
| A buffer (%) | 99 | 1 | 1 | 99 | 99 |
| B buffer (%) | 1 | 99 | 99 | 1 | 1 |

Flow rate: 0.3 mL/min
Inflow: 5 µL
Column: Mightysil RP-18 GP 50-2.0 (5 µm) (KANTO CHEMICAL CO., INC.)

### MS Scan conditions

ES+
Q1 scan range (m/z): 50 to 600
Time (min): 0 to 9
Cone voltage (V): 10 to 35

### 3-1 (Purification of TME-IAM)

The partially purified liquid was injected into an HPLC using a preparative column, and fractions were collected every 2 minutes. The obtained fractions were analyzed for the absorbances at 220 nm, 250 nm, and 275 nm under the same conditions as in the section 1-2 to confirm the isolation of TME-IAM.

### Reagents

0.1% formic acid
Methanol (KANTO CHEMICAL CO., INC.)

### Machines

Pump: PU-2089 plus (JASCO Corporation)
Detector: 875-UV (JASCO Corporation)

### HPLC fractionation conditions

A buffer: 0.1% formic acid
B buffer: Methanol

### Gradient:

**[Table 3]**

| | | | |
|---|---|---|---|
| Time (min) | 0 | 200 | 240 |
| A buffer (%) | 100 | 0 | 0 |
| B buffer (%) | 0 | 100 | 100 |

Flow rate: 3 mL/min
Detection wavelength: 275 nm
Inflow: 1 mL
Column: CAPCELL PAK C18 UG80 5 µm (Shiseido Company, Limited)

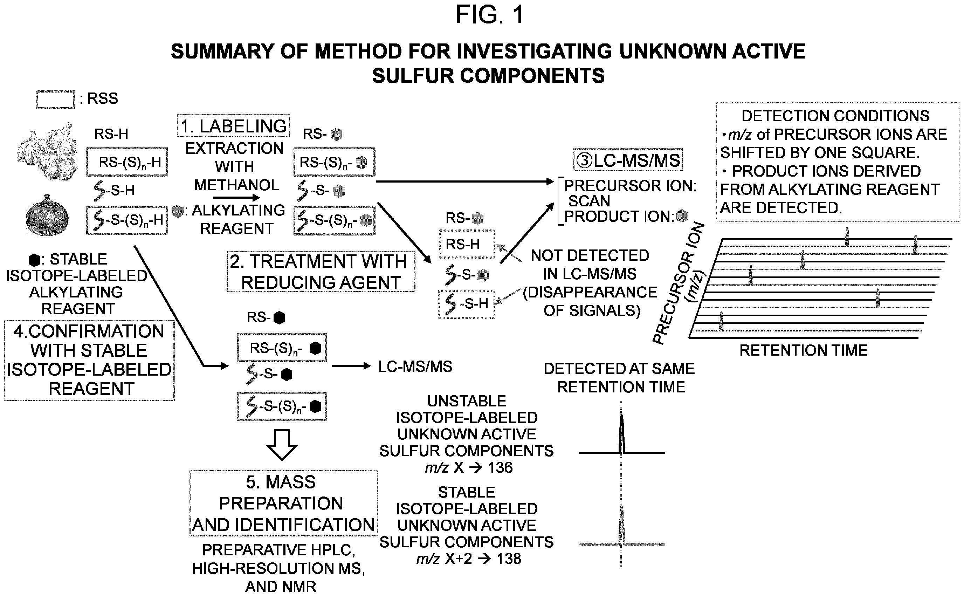

### (Procedure of identification method of the present invention): Figure 1

A procedure for performing the method for identifying unknown active sulfur components will be divided into the first to fifth steps to describe the steps. As the first step, RSSs are first labelled with an alkylating agent. Hereinafter, the first step will be specifically described.

As a sample, food such as onion or garlic or animal tissue shredded into 2 to 3-mm pieces beforehand or liquid such as a suspension of bacteria, algae, or the like or blood is used.

This sample is first homogenized in 80% methanol containing TME-IAM (at a final concentration of 1 mM) that is a new alkylating agent in an amount that is 10 times the weight of the sample with a polytron homogenizer. This homogenized sample is then light-shielded and incubated (reacted) at 37°C for 30 minutes to label active sulfur components and thiol compounds with the alkylation reagent.

Thus using TME-IAM for labeling has the effect of alkylating RSSs to form stable derivatives. Furthermore, the suppression of the hydrolysis of the active sulfur structures with TME-IAM enables inhibiting the RSSs from being decomposed in the step of extracting the RSSs from the sample.

The sample in which the active sulfur components and the thiol compounds are labeled is subsequently centrifuged (18,000 g, 4°C, 15 minutes) to collect the centrifuged supernatant. Then, 10% formic acid in an amount that is 1/100 times the volume thereof is added thereto to stop the alkylation reaction.

The reaction liquid is then concentrated to approximately 1/10 times the initial volume by centrifugation. The reaction liquid is partially purified through an octadecyl silica gel (ODS) column (Wakogel 100C18) equilibrated with 0.1% formic acid. Specifically, the whole amount of the concentrated sample is applied to the column, and the column is washed with 0.1% formic acid. The TME-IAM-labeled derivatives of the RSSs and the thiol compounds are then eluted with 0.1% formic acid containing 80% methanol. The eluate is concentrated to approximately 1/10 times the initial volume by centrifugation to complete the partial purification.

Although compounds such as tyrosine, glycerol, and polyvinyl alcohol having hydroxy phenyl groups or hydroxyl groups are used as additives for suppressing the decomposition of RSSs, commercial items are used as all the above-mentioned compounds.

As indicated by the above-described chemical formula, the alkylating agent may not be only TME-IAM but also similar structures including methyltyramine iodoacetamide (iodoacetamide derivatives having a hydroxyphenyl structure or a tyrosine structure).

As the second step, the active sulfur is next decomposed by treatment with a reducing agent. Hereinafter, the second step will be described specifically.

A portion (approximately 100 µl) of the liquid extracted during the labeling of the RSSs in the first step is mixed with a 20 mM phosphate buffer containing 2-mercaptoethanol (at a final concentration of 1%) (pH 7.0).

This mixture is then light-shielded and incubated (reacted) at room temperature for 1 hour to decompose the active sulfur components. The sample treated with the reducing agent and the sample not treated with the reducing agent are provided thereby.

As the third step, the active sulfur components are then detected with a mass spectrometer. Hereinafter, the third step will be specifically described.

The sample treated with the reducing agent and the sample not treated with the reducing agent provided in the second step are analyzed with a mass spectrometer. The mass spectrometer used herein is a liquid chromatography-tandem mass spectrometer (HPLC-MS/MS). At this time, the mass spectrometer is operated in a multiple reaction-monitoring mode that is set up so as to scan the precursor ions square by square and detect product ions derived from TME-IAM (*m*/*z*: 136).

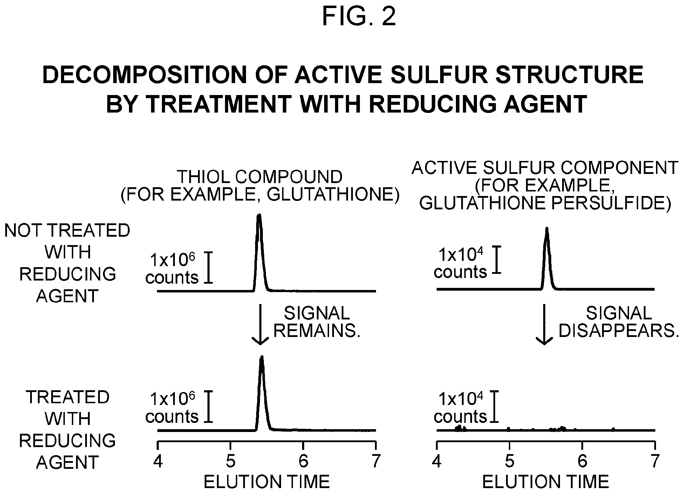

As shown in Figure 2, the analytical results of the two samples obtained with this mass spectrometer are compared. As a result of the comparison, the components of signals disappeared by the treatment with the reducing agent are determined as candidates for the active sulfur components contained in the sample. This determination is made by the following phenomenon. Although the signal of the TME-IAM-labeled derivative of glutathione, which is a thiol compound, (m/z: 543) does not disappear even after the treatment with the reducing agent, the signal of the TME-IAM-labeled derivative (m/z: 575) of glutathione persulfide, which is RSSs, is disappeared by the treatment with the reducing agent completely.

As the fourth step, it is subsequently confirmed with a stable isotope-labeled reagent whether the components of the signals confirmed in the third step are signals derived from TME-IAM. Hereinafter, the fourth step will be described specifically.

The stable isotope-labeled alkylating agent with a mass increased of 2 is used for this determination. The candidates for the active sulfur components alkylated with this synthesized alkylating agent are homogenized in 80% methanol containing TME-IAM in the same way as in the first step again and analyzed with the mass spectrometer. It can be confirmed in the mass spectrometer thereby whether the signals in which the precursor ions and product ions of the candidates for the active sulfur components each increased by 2 mass are detected at the same retention times as the signals of the candidates for the active sulfur components detected in the third step, respectively.

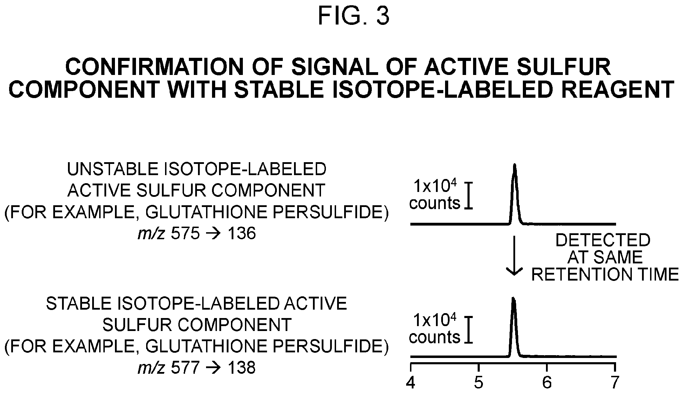

As shown in Figure 3, for example, by employing the unstable isotope-labeled glutathione persulfide (m/z: 575) and the stable isotope-labelled glutathione persulfide (m/z: 577), having 2 heavier mass, as the precursors, the product ions derived from the TME-IAMs (*m*/*z*: 136 and 138) were detected. Both signals were consequently detected at the same retention time. It can be determined thereby that the signals are signals derived from TME-IAM.

As the fifth step, the structures of the active sulfur components are finally analyzed and identified. Hereinafter, the fifth step will be specifically described.

After the confirmation that the signals of the candidates for the active sulfur components are signals derived from TME-IAM in the fourth step, the active sulfur components are extracted and purified from the sample.

A large amount of the sample is homogenized in 80% methanol containing TME-IAM in the same way as in the first step. The sample subjected to the homogenization treatment is centrifuged to collect and concentrate the supernatant. After the concentration of the sample, the sample is partially purified through an ODS solid phase extraction pretreatment column.

The partially purified liquid acquired here is fractionated by preparative HPLC. The fractionated fractions are analyzed with a mass spectrometer again, and the active sulfur components are purified thereby. The active sulfur components are purified in combination of multiple HPLC columns in different separation modes such as a normal phase column, an ion-exchange column, and a mixed-mode column in the ODS solid phase extraction pretreatment column.

The active sulfur components were then subjected to structural analysis with a high-resolution mass spectrometer and a nuclear magnetic resonator (NMR) for identification. The procedure for performing the method for identifying active sulfur of the present invention is as mentioned above.

### (Example for investigating active sulfur components)

As Example of the present invention, a test for investigating unknown RSSs from garlic will be described hereinafter. First, 25 ml of methanol (containing 0.8 mM TME-IAM and 10 mM Tris-HCl, pH 7.4) was added to 5.0 g of garlic pieces, and the mixture was homogenized with a polytron homogenizer for preparing a sample.

The homogenized reaction liquid was subsequently light-shielded and incubated at 37°C for 1 hour. Then, 250 µl of 10% formic acid was added to this reaction liquid to stop the reaction.

The liquid in which the reaction was stopped was centrifuged (4°C, 13,040 g, 20 minutes). The centrifugated supernatant extracted after the centrifugation was collected and concentrated to approximately 4 to 5 ml by centrifugation. To the solution concentrated by the centrifugation were added 1 ml of 100% methanol and 9 ml of 0.1% formic acid, and the mixture was then centrifuged (4°C, 13,040 g, 20 minutes) again.

The centrifuged solution was loaded on a reverse phase solid phase column (Wakogel 100C18, column size: 3.5 ml) equilibrated with 0.1% formic acid beforehand. Then, 17.5 ml of 0.1% formic acid was loaded on the solid phase column to wash the column. Furthermore, 5 ml of ultrapure water was loaded on the solid phase column to wash the column again. Then, 17.5 ml of 100% methanol was loaded on this solid phase column to collect the eluate.

The eluate was concentrated to approximately 1 ml by centrifugation and then centrifuged (4°C, 13,040 g, 20 minutes). After the centrifugation, the centrifuged supernatant was collected and analyzed with a liquid chromatography-mass spectrometer (LC-MS/MS).

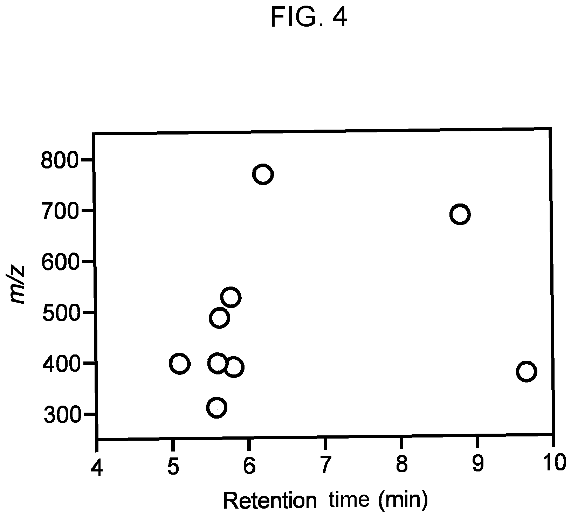

To 100 µl of the above-described sample were added 15 µl of 1 M Tris-HCl (pH 7.4), 15 µl of 2-mercaptoethanol, and 20 µl of ultrapure water for reduction treatment. The reduction-treated sample was light-shielded, incubated at room temperature for 30 minutes, and then analyzed with the LC-MS/MS. The test results are as shown in Figure 4.

### HPLC conditions

Flow rate: 0.3 ml
Inflow: 10 µl
Column: Mightysil RP-18 GP 50-2.0 (5 µm)

### HPLC gradient program

**[Table 4]**

| | | | | | |
|---|---|---|---|---|---|
| Time (min) | 0 | 10 | 11 | 11.1 | 14 |
| 0.1% FORMIC ACID (%) | 99 | 1 | 1 | 99 | 99 |
| METHANOL (%) | 1 | 99 | 99 | 1 | 1 |

### MS conditions

**[Table 5]**

| Parent ion (m/z) | Product ion (m/z) | Cone voltage (v) | Collision energy (V) | Polarity |
|---|---|---|---|---|
| 241∼1360 | 136 | 35 | 45 | Positive |

### (Discussion about test results)

Standard substances that were TME-IAM adducts of glutathione persulfide and glutathione prepared *in vitro* were preliminarily examined, so that product ions generated from the TME-IAM adduct were determined. It has been confirmed that if the samples were reduction-treated with 2-mercaptoethanol before the mass spectrometry, only the signal of the standard substance that is a TME-IAM adduct of the glutathione persulfide disappears. These examination results make it clear that the present invention is right.

Mouse liver was analyzed by the method of the present invention, so that multiple candidates for RSSs were detected. The analysis using stable isotope-labeled TME-IAM was also performed to detect signals at heavier mass by 2. This shows that the signals detected this time strongly suggests that unknown RSSs may form adducts with TME-IAM.

### (Method for using the present invention)

The method for identifying new sulfur compounds of the present invention enables analyzing foods, tissues and cells of animals and plants, fungi, viruses, clinical samples (blood plasma, serum, cerebrospinal fluid, bronchial lavage fluid, and the like) as targets. The method therefore contributes to the investigation of RSSs that can be new physiologically active substances or biomarkers for diseases or illnesses.

Regarding the method of the present invention as described above, any modification, replacement, and improvement in accordance with the spirit and theory of the present invention shall be included in the present invention.

## Claims

1. A method for identifying active sulfur in a sample, comprising:
(a) a first step of labeling active sulfur in the sample with an alkylating agent;
(b) a second step of adding a reducing agent to a portion of liquid extracted in the first step to decompose active sulfur;
(c) a third step of applying the sample subjected to reduction treatment and the sample not subjected to reduction treatment after the labeling to an analyzer, comparing results of analysis of both samples, and determining components of signals disappeared by the reduction treatment as candidates for the active sulfur in the sample;
(d) a fourth step of confirmation that the signals are derived from the alkylating agent; and
(e) a fifth step of, after the confirmation, extraction and purification of the components of the signals from the sample, and performing structural analysis of the components.

2. The method for identifying active sulfur according to claim 1, wherein the alkylating agent is TME-IAM and a similar structure thereto.

3. The method for identifying active sulfur according to claim 1, wherein the analyzer is a liquid chromatography-tandem mass spectrometer (HPLC-MS/MS).

4. The method for identifying active sulfur according to claim 1, wherein, in the fifth step, the extraction and purification is performed by using an ODS solid phase extraction pretreatment column.

5. The method for identifying active sulfur according to claim 1, wherein a purified liquid obtained by the extraction and purification is fractionated by a preparative HPLC and applied to the analyzer.

6. The method for identifying active sulfur according to claim 1, wherein the structural analysis of the components is performed by using a high-resolution mass spectrometer and a nuclear magnetic resonator (NMR).
